# EUROPEAN PATENT SPECIFICATION

(11) **EP 2 623 920 B1**
(45) Date of publication and mention of the grant of the patent: **03.10.2018**
(21) Application number: 13153190.7
(22) Date of filing: 30.01.2013
(51) Int. Cl.: F41H 5/013, F41H 5/02

(54) **ARMOUR SYSTEM**
PANZERUNGSSYSTEM
SYSTÈME DE BLINDAGE

(30) Priority: 03.02.2012 GB 201201903; 17.07.2012 GB 201212702; 22.01.2013 GB 201301121
(43) Date of publication of application: 07.08.2013
(73) Proprietor: Amsafe Bridport Limited, Bridport, Dorset DT6 3QU (GB)
(72) Inventor: Wood, John, Weymouth, Dorset DT3 5AU (GB)
(74) Representative: Stratagem IPM Limited

(56) References cited:
- EP-A1- 1 264 760
- WO-A1-2004/065842
- US-A- 2 684 226
- US-A- 3 329 385
- US-A1- 2008 100 052
- US-A1- 2011 303 817
- US-A1- 2012 011 993

## Description

The present invention relates to an armour system.

It is known to use net-based armour systems mounted to vehicles and other structures to defend against RPG attacks. The net-based armour does not prevent an RPG from hitting the vehicle, but if a nose cone of an RPG enters a mesh of the net it can deform the nose cone of the RPG and prevent the fuse from firing. This effectively neutralises the RPG and it becomes no more than a fast moving projectile, which will not be able to penetrate the armour of the vehicle.

A number of mounting assemblies are known for mounting net-based armour systems onto vehicles, and the nature of the mounting assembly will depend on the construction of the net-based armour. Net-based armour may take the form of a net attached directly to support arms mounted on a vehicle, or it may take the form of a net fitted into a frame, which may be provided with its own support arms, or may be attached to support arms mounted on a vehicle. The advantage of fitting the net into a frame is that it prevents the net from becoming tangled when not in use, i.e. not mounted on the vehicle, and makes it easier to fit and replace damaged sections. The frames may be of any size or shape, depending on the size and shape of the vehicle they are to be fitted to. The most common shape of frame is a rectangular frame, which will generally be mounted onto four support arms located in the region of the corners of the frame. The systems are typically modular and may comprise a number of different frames covering different sections of the vehicle.

As noted above, the net-based armour systems are typically mounted to the vehicle on support arms, which may form part of the frame, or may be separate structures. It is known to mount nets on rigid support frames. Such frames function well in supporting the net, but can distort if heavily loaded, for example, when subjected to a hit from a projectile such as an RPG, or when striking or being struck by an object during use of the vehicle, e.g. hitting a wall when the vehicle is being driven. Such distortion can result in a "domino effect", causing damage to adjacent frame sections and/or locking against adjacent frame sections. This has the potential to be very dangerous to crew members operating in dangerous situations, as it can prevent them from being able to safely exit the vehicle, as well as preventing the net-based armour from functioning properly.

As an alternative to rigid frames, it is also known to mount nets (with or without frames) on support arms which are designed to deflect when subjected to heavy loads. Such support arms are provided with a shear pin which will break when loaded above a certain value. The arm is then able to pivot to prevent further damage to the net or frame. This construction offers advantages over the rigid support frame described above, but it requires the replacement of the shear pin once it has been broken. Furthermore, it does not permit minor deflections of the frame, as the arm cannot move until the shear pin has broken and then it is free to move into a collapsed position.

At least some of the precharacterising features of the accompanying claims are known from WO2004/065842A1, US3329385A, US2684226A, US2012/0011993 A1, US2011/303817A1 and US2011/303817.

It is the object of the present invention to overcome some of the problems of the prior art, or at least to provide an alternative mounting assembly for mounting net-based armour systems, to other structures, for example a vehicle.

According the present invention there is provided an armour system according to appended independent claim 1 comprising: net-based armour; and a mounting assembly, comprising: a base, for attaching the mounting assembly to a vehicle or structure; and an arm, connected to the base, for attaching said net based armour to the mounting assembly, wherein the base comprises a cam surface and the arm comprises a cam follower biased against the cam surface, the cam surface being shaped such that the arm can be located in at least two distinct positions; characterised in that the cam surface comprises a pair of recesses corresponding to the distinct positions, each recess having a C-shaped profile, and the cam follower comprises a roller bearing that has a profile that corresponds to the C-shaped profile of the recesses such that the roller bearing may locate within each of the recesses, the cam follower being spring biased to positively locate the roller bearing within the recesses.

The "distinct positions" may be selected according to the intended use of the mounting assembly, but will typically include at least one "normal" position - in which the net-based armour is in its operating position - and at least one "storage" position - in which the net-based armour is in a stored position.

A mounting assembly according to the present invention offers the advantage that the arm is not rigidly attached to the base, and is capable of minor deflection before returning to its "normal", in use, position. So long as the applied force is less than a pre-determined value, the arm will deflect and then return to its normal position. This is particularly advantageous in enabling the mounting assembly to cope with the general knocks that it may receive in normal use, for example, when it is used to mount a net-based armour system to a vehicle. In this case the mounting assembly should be able to deflect when it comes into contact with obstacles, for example roadside obstacles, and then return to its normal position. A further advantage of a mounting assembly according to the present invention is that the biasing force can be manually overcome - by applying a force greater than the pre-determined value - to move the arm into a "storage" position.

In the invention the cam surface is shaped such that the arm can be located in at least distinct positions. The two distinct positions comprise a "normal" position and a "storage" position. In an embodiment of the invention when the arm is in its "storage" position it points towards the direction of travel of the vehicle.

In an embodiment of the invention the cam surface is shaped such that the arm can be located in at least three distinct positions. The three positions may conveniently comprise one "normal" position and two "storage" positions.

In an embodiment of the invention the base comprises a planar section for attaching the mounting assembly to the vehicle or structure, and in a first one of the distinct positions the arm is perpendicular to the planar section. This is what is described above as a "normal" position of the arm, and is the position the arm is in when the net-based armour system, is operational. In the "normal" position the arm is perpendicular to the surface of the vehicle, such that it can hold the net-based armour in a spaced relationship to the vehicle.

In an embodiment of the invention the base comprises a planar section for attaching the mounting assembly to the vehicle or structure, and in a first one of the distinct positions the arm is at approximately 135° relative to the planar section. This construction is particularly advantageous for mounting at a corner of a vehicle or structure. The arm projects outwardly from the corner and provides additional coverage in this area.

In an embodiment of the invention the base comprises a planar section for attaching the mounting assembly to the vehicle or structure, and in a second one of the distinct positions the arm is parallel to the planar section. This is what is described above as a "storage" position of the arm, and is the position the arm is in when the net-based armour system, is not in use. In the "storage" position the arm lies flat against the surface of the vehicle. This is advantageous when parking the vehicle in close proximity to other vehicles, but the net-based armour may also be moved into the "storage" position in order to permit the vehicle to pass through narrow passageways.

In an embodiment of the invention the base comprises a planar section for attaching the mounting assembly to the vehicle or structure, and in a third one of the distinct positions the arm is parallel to the planar section. This position also corresponds to a "storage" position, and is separated from the second position by 180°.

In an embodiment of the invention the arm is pivotally mounted between a pair of parallel cam surfaces. In an embodiment of the invention the cam follower comprises a pair of cam following surfaces.

In an embodiment of the invention the cam follower comprises a pair of roller bearings.

The spring may conveniently be a coil spring located between the cam follower and a spring stop located on the arm. In an embodiment of the invention the spring is internally located within the arm.

In an embodiment of the invention the arm remains in one of the distinct positions until acted on by a predetermined force sufficient to overcome the biasing force and move the arm to one of the other distinct positions. As discussed above, the arm may have a "normal" position when in use, and at least one "storage" position. The biasing force is sufficient to retain the arm in one of its distinct positions, e.g. its "normal" position, while permitting minor deflections. When a force acts on the arm the cam follower slides over the cam surface and exerts a force on the biasing means. Only when the force exerted on the biasing means is greater than the predetermined value will the arm move from one distinct position to another.

In an embodiment of the invention the predetermined force is at least 150N. In an embodiment of the invention the predetermined force is at least 160N. In an embodiment of the invention the predetermined force is at least 170N. In an embodiment of the invention the predetermined force is at least 180N. In an embodiment of the invention the predetermined force is at least 190N. In an embodiment of the invention the predetermined force is at least 200N. In an embodiment of the invention the predetermined force is at least 210N.

In an embodiment of the invention the arm is rigid.

In an embodiment of the invention the arm is tubular. In an embodiment of the invention the arm is a square-shaped tube.

In an embodiment of the invention the arm is flexible. The arm must be sufficiently resilient to fulfil its primary function of supporting a net-based armour system, but a certain degree of flexibility enables it to move in all directions. This is particularly advantageous in allowing the arm to make minor deflections in all directions, and not just along its path of rotation.

In an embodiment of the invention the arm comprises a steel wire rope.

A variety of attachment mechanisms are envisaged within the scope of the present invention. For example, the net-based armour may simply be bolted, welded, screwed or tied to the arm. However, in an embodiment of the invention the arm further comprises an attachment member at an end remote from the base, for attaching the net-based armour to the mounting assembly.

In an embodiment of the invention the base is a two-part construction comprising a first part for attaching to a vehicle or structure and a second part for attaching to the arm, and the second part is pivotally mounted on the first part. This construction provides an additional degree of movement for the arm, for example in addition to being able to pivot left and right between the at least two positions described above, e.g. the "normal" and the "storage" positions, the arm can also pivot up and down to cope with deflections in these directions. It should be noted that the terms "up", "down", "left" and "right" as used herein are relative to the fixing position of the assembly and may vary depending on how the assembly is attached to a vehicle or structure. The key aspect of this embodiment of the invention is that it provides an additional degree of movement, which may be, for example, perpendicular to the movement of the arm between the "normal" and "storage" positions.

In an embodiment of the invention the first part of the base comprises a planar section for attaching the mounting assembly to a vehicle or structure, and the second part is biased into a position such that the arm is perpendicular to the planar section.

In an embodiment of the invention the second part of the base is biased into position by means of a resilient biasing means. In an embodiment of the invention the resilient biasing means is a torsion spring. In an embodiment of the invention the torsion spring is pre-tensioned.

In an embodiment of the invention the assembly further comprises a locking assembly for locking the arm in a position parallel to the planar section.

According to an embodiment of the present invention there is provided a mounting assembly, comprising: a base, for attaching the mounting assembly to a vehicle or structure; and an arm, connected to the base, for attaching net-based armour to the mounting assembly, wherein the base is a two-part construction comprising a first part for attaching to a vehicle or structure and a second part for attaching to the arm, and wherein the second part is pivotally mounted on the first part.

A mounting assembly according to the present invention offers the advantage that the arm is not rigidly attached to the base, and is capable of minor deflection before returning to its "normal", in use, position. This is particularly advantageous in enabling the mounting assembly to cope with the general knocks that it may receive in normal use, for example, when it is used to mount a net-based armour system to a vehicle. In this case the mounting assembly should be able to deflect when it comes into contact with obstacles, for example roadside obstacles, and then return to its normal position. In an embodiment of the invention the second part of the base is biased into position by means of a resilient biasing means. In an embodiment of the invention the resilient biasing means is a torsion spring. In an embodiment of the invention the torsion spring is pre-tensioned.

In an embodiment of the invention the assembly further comprises a locking assembly for locking the arm in a position parallel to the planar section.

In an embodiment of the invention the base comprises a cam surface and the arm comprises a cam follower biased against the cam surface, the cam surface being shaped such that the arm can be located in at least two distinct positions.

According to a further embodiment of the present invention there is provided an armoured vehicle comprising at least one mounting assembly as described above. The mounting assembly according to the present invention has wide applicability, and it is envisaged that it could be used for many different applications in which it is desired to have a mounting arm which can be positively located into distinct positions. One particular application which has been identified by the present inventors is the use of the mounting assembly to mount net-based armour to armoured vehicles. As described above, the mounting assembly could be configured to exist in a "normal", or operational state, and a "storage" state.

In an embodiment of the invention a defensive shield is mounted on the mounting assemblies. According to the invention a net-based armour system is mounted on the mounting assemblies. The present inventors have identified the mounting assembly according to the present invention as offering particular advantages over currently available apparatus for mounting defensive shields, such as net-based armour systems, onto vehicles.

According to a further embodiment of the present invention there is provided a net-based armour system comprising a plurality of mounting assemblies as described above.

The present invention will now be described, purely by way of example, with reference to the accompanying drawings, in which:
Fig. 1 shows a perspective view of a mounting assembly;
Fig. 2 shows a side view of the mounting assembly of Fig. 1;
Fig. 3 shows a plan view of the mounting assembly of Fig. 1;
Fig. 4 shows a perspective view of a base plate and cam surface of the mounting assembly of Fig. 1;
Fig. 5 shows a perspective view of a net-based armour system attached to a vehicle;
Fig. 6 shows a close up view of a portion of the net-based armour system of Fig. 5;
Fig. 7 shows a perspective view of a mounting assembly according to the present invention;
Fig. 8 shows a plan view of the mounting assembly of Fig. 7;
Fig. 9 shows a side view of the mounting assembly of Fig. 7;
Fig. 10 shows a bottom view of the mounting assembly of Fig. 7;
Fig. 11 shows a perspective view of a mounting assembly according to the present invention;
Fig. 12 shows a plan view of the mounting assembly of Fig. 11;
Fig. 13 shows a side view of the mounting assembly of Fig. 11; and
Fig. 14 shows a bottom view of the mounting assembly of Fig. 11.

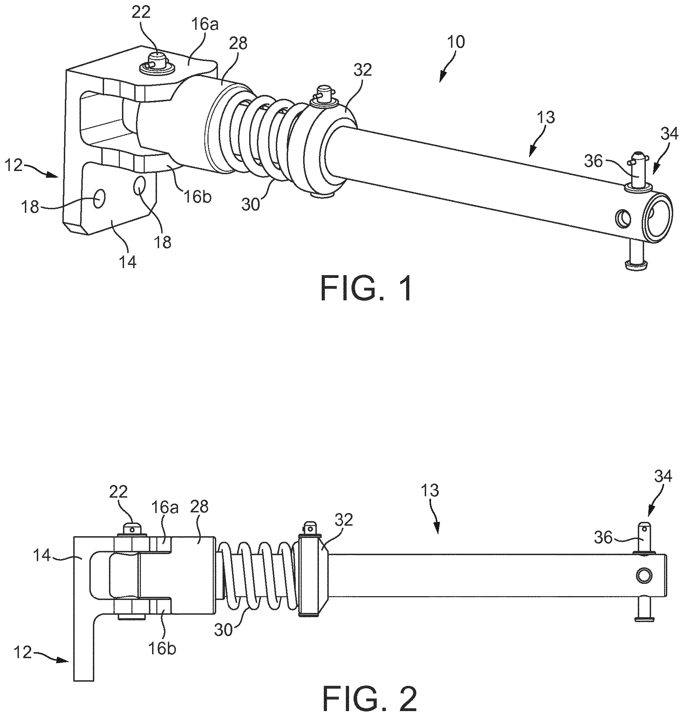

Fig. 1 shows a perspective view of a mounting assembly 10. In general, the mounting assembly 10 can be used in any application where it is desired to mount a net-based armour system onto a vehicle.

Figs. 1-3 show a mounting assembly 10. The mounting assembly 10 comprises a base plate 12, and an arm 13 pivotally mounted on the base plate 12. In use the arm 13 is capable of pivoting between three distinct positions, as will be described in more detail below.

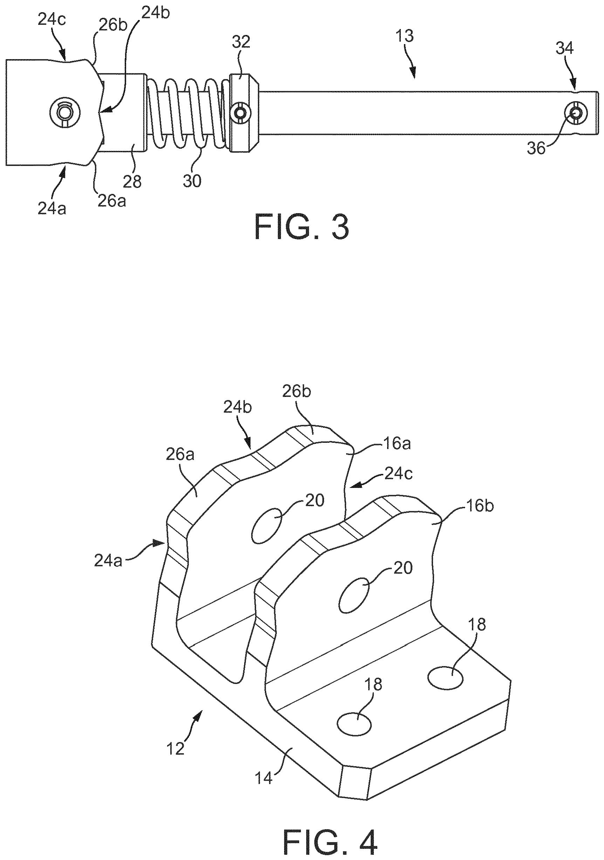

The base plate 12, which can be best viewed in Fig. 4 comprises a planar section 14 and a pair of parallel cam surfaces 16a, 16b projecting at right angles from the planar section 14. The planar section 14 of the base plate 12 is provided with screw holes 18 for securing the mounting assembly 10 to a vehicle. The cam surfaces 16a, 16b are provided with aligned apertures 20 for receiving a pin 22.

As can best be seen in Figs. 3 and 4, the cam surfaces 16a, 16b each comprise recesses 24a, 24b, 24c. These recesses 24 serve to positively locate the arm 13 into one of its three possible positions, as will be described in more detail below. The recesses 24 are generally "V" shaped in profile, and adjacent recesses 24 are separated by spacer sections 26a, 26b. The spacer sections 26a, 26b serve to provide additional resistance to movement of the arm 13, as will be described in more detail below. The shape and angle of the recesses 24, and the shape and angle of the spacer sections 26a, 26b relative to the recesses 24, can be adjusted to select the force required to move the arm 13 from one of its distinct positions to another one of its distinct positions. The force required to move the arm 13 is also dependent on the strength of the biasing force, as will be described in more detail below.

The arm 13 is pivotally mounted onto the base plate 12 by a pin 22 which passes through the apertures 20 in the base plate 12 and through an end portion of the arm 13. In use, when the base plate 12 is mounted onto the flat surface of a vehicle, the arm is capable of pivoting through 180°.

A profiled cam follower 28 is provided on the arm 13. The cam follower 28 has a profile which corresponds to the "V" shaped profile of the recesses 24, such that it may locate within each of the recesses 24 on each cam surface 16a, 16b.The arm 13 further comprises a spring 30 and a spring stop 32 which bias the cam follower 28 against the cam surfaces 16. The spring 30 is a heavy duty coil spring, although other biasing means are envisaged. The biasing force provided by the spring 30 causes the cam follower 28 to be positively located in the recesses 24 on the cam surfaces 16a, 16b. In order to move the arm 13 from one position to another, i.e. to move the cam follower between adjacent recesses 24, a force must be applied to the arm 13 which exceeds the biasing force provided by the spring 30. The biasing force of the spring 30, or the position of the spring stop 32, can be adjusted to select the sensitivity of the arm 13.

The arm 13 may be rigid or flexible, depending on the particular application. In the present case the arm 13 is a flexible steel wire rope covered in a resilient plastic sleeve. It will be apparent that it is necessary to get the correct balance between rigidity and flexibility, to ensure that the arm 13 is sufficiently resilient to support the net-based armour in operational conditions, while being capable of deflecting when subject to impact. As will be appreciated from Figs. 1-3, the arm is only capable of rotation in a single plane. This plane of rotation is parallel to the direction of travel of the vehicle, so is the direction in which the arm is most likely to receive an impact during use, e.g. if the arm 13 strikes an obstacle while the vehicle is driving. It is also the direction which enables the arm 13 to be folded flat against the vehicle for storage. However, it is possible that the arm 13 may receive impacts in other directions, e.g. knocks during use. In this case the flexible arm 13 enables the mounting assembly 10 to deflect to absorb the energy from the impact.

At the end remote from its attachment to the base plate 12, the arm 13 is provided with an attachment member 34 for attaching a net-based armour system to the mounting assembly 10. The attachment member 34 may comprise a pin 36 for engaging with the net-based armour, or any other suitable attachment means, as is well-known. In an alternative embodiment the arm 13 may not be provided with any specific attachment means, and the net-based armour, such as a net-based armour system, may comprise means for attaching it to the arm 13.

Figs. 1-3 show the mounting assembly 10 with the arm in its "normal" position. This is the position in which the arm will be located during normal use of the net-based armour system, as it holds the net-based armour system in spaced relationship with the vehicle.

The cam follower 28 is biased towards the base plate 12 by the spring 30 and is positively received in the central recesses 24b in the cam surfaces 16a, 16b. Under normal operational conditions it is envisaged that the arm 13 will remain in this position. However, the arm is capable of minor deflection while still remaining in the "normal" position. Such minor deflections may be caused, for example, by impact with obstacles while the vehicle is driving. When the arm 13 is impacted it will deflect and the cam follower 28 will move relative to the central recesses 24b. If the force of the impact is less than a predetermined value - determined by the strength of the biasing force exerted by the spring 30, and the shape and angle of the recesses 24 and spacer sections 26 - then the cam follower will remain within the confines of the central recesses 24b, and the arm 13 will return to its "normal" position when the force is removed.

However, if the arm 13 is subjected to a larger force, e.g. it impacts against a wall as the vehicle is travelling, and the force is sufficient to overcome the biasing force of the spring 30, then the cam follower 28 will move out of the central recesses 24b in the direction of the applied force and slide over the appropriate spacer section 26a, 26b and into one of the outer recesses 24a, 24c. When the cam follower 28 positively locates into one of the outer recesses 24a, 24c the arm 13 moves from its "normal" position to its "storage" position. In the "storage" position the arm 13 lies flat against the vehicle and it will not be subjected to further impact. The arm can also be manually moved from its "normal" position to its "storage" position by the application of a force sufficient to overcome the biasing force of the spring 30. This may be done to save space when parking vehicles, or if it is known that the vehicle will be travelling down a passageway which is narrower than the combined width of the vehicle and the extended net-based armour system.

For each mounting assembly 10 there is a direct correlation between the force applied to the arm 13 and the angular movement of the arm 13. In the embodiment illustrated in Fig. 1-3 a force of approximately 70N is required to start the arm moving. A force of 70N corresponds to a deflection of approximately 5° from the "normal" position, with the arm 13 returning to the "normal" position when the force is removed. The angle of deflection increases as the force increases, up to a force of approximately 205N, at which point the arm 13 has deflected by approximately 60° from its "normal", which is sufficient to cause it to slide over the spacer section 26 and into its "storage" position in an adjacent recess 24.

The following table shows the forces required to achieve angular deflection from the "normal" position.

| Applied force (N) | Angular deflection (°) |
|---|---|
| 70 | 5 |
| 73 | 10 |
| 75 | 15 |
| 76 | 20 |
| 77 | 25 |
| 80 | 30 |
| 95 | 35 |
| 115 | 40 |
| 140 | 45 |
| 165 | 50 |
| 200 | 55 |
| 205 | 60 |

If the arm 13 receives an applied force up to approximately 200N, it will deflect by up to approximately 55° from its "normal" position, before returning to the "normal" position when the applied force is removed. If the arm 13 received an applied force of greater than approximately 205N then it will deflect by approximately 60°, causing it to slide over the spacer section 26 and into an adjacent recess 24. The arm 13 will remain in this "storage" position until a force is applied in the opposite direction to return it to its "normal" position.

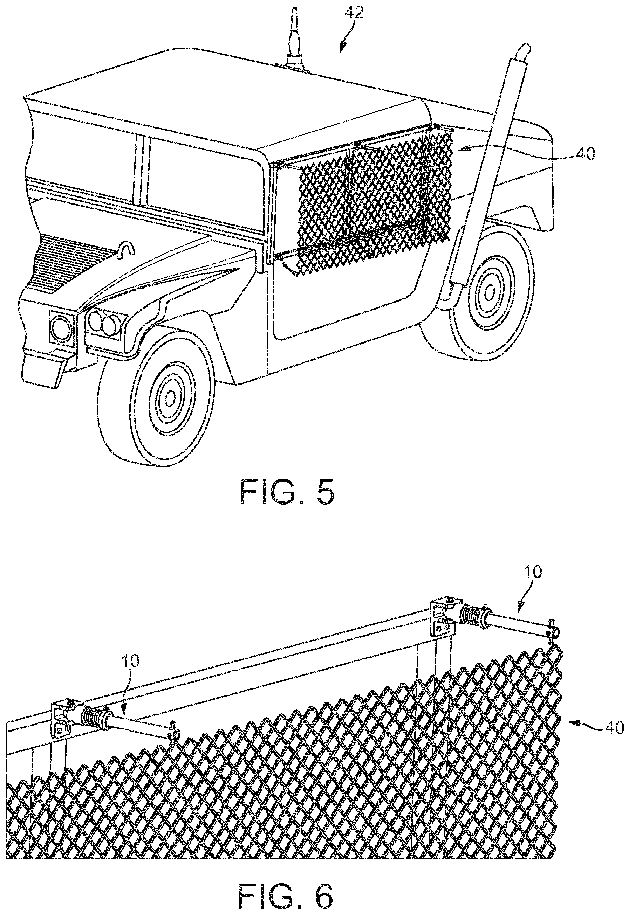

Figs. 5 and 6 show perspective views of a plurality of mounting assemblies 10 used to mount a net-based armour system 40 on a vehicle 42. A free end of the arm 13, i.e. the end which is not attached to the base 12, is attached to the net-based armour 40 for holding it in a spaced relationship relative to the vehicle 42. If the arms 13 of the mounting assemblies are subject to a force greater than or equal to 205N they will move from the "normal" position into a "storage" position in which they will lie flat against the body of the vehicle 42.

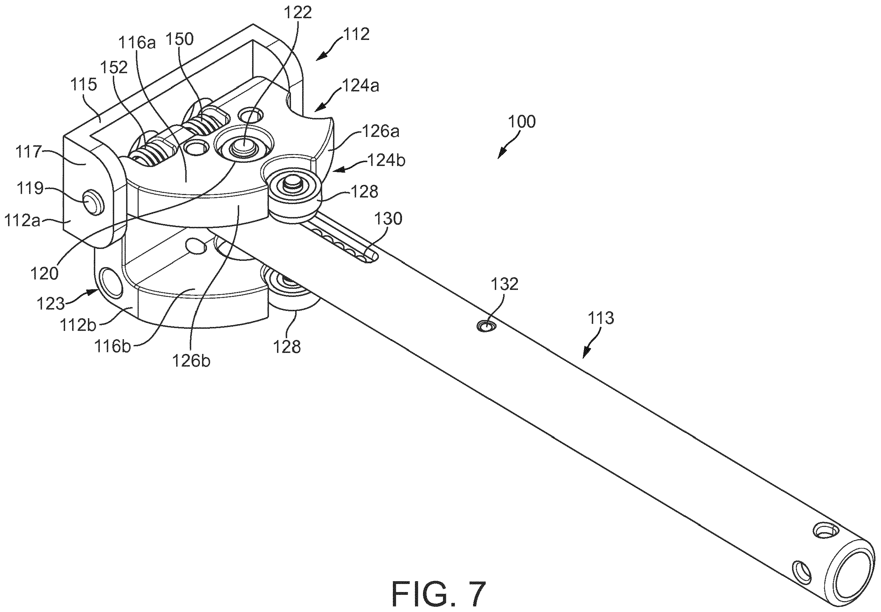

Figs. 7-10 show a mounting assembly 100 according to the present invention. The mounting assembly 100 shares many features in common with the mounting assembly 10 of Fig. 1, and like parts will be numbered the same but increased by 100.

The mounting assembly 100 can be used for a wide variety purposes. In general, the mounting assembly 100 can be used in any application where it is desired to mount a net-based armour system onto a vehicle.

Fig. 7 shows a perspective view of the mounting assembly 100. The mounting assembly 100 comprises a base plate assembly 112, and an arm 113 pivotally mounted on the base plate 112. In use the arm 113 is capable of pivoting between two distinct positions relative to the base plate assembly 112, as will be described in more detail below.

The base plate assembly 112, is a two-part construction comprising a first part 112a for attaching to a vehicle or structure, and a second part 112b for attaching to the arm 113. The first part 112a is generally u-shaped and comprises a planar section 115 and a pair of lugs 117. The second part 112b of the base plate assembly 112 is constructed in a generally similar manner to the base plate 12 of Fig. 1, and comprises a planar section 114 and a pair of parallel cam surfaces 116a, 116b projecting at right angles from the planar section 114.

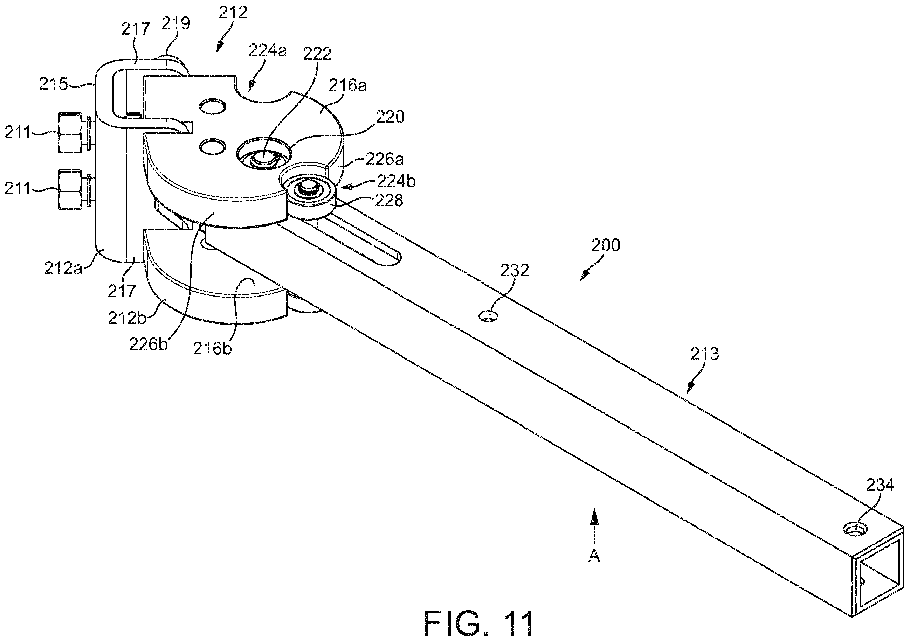

The second part 112b of the base plate assembly 112 is pivotably mounted on the first part 112a by means of a pivot bar 119, which passes through an upper channel in the second part 112b and is received in apertures in the lugs 117. The upper channel cannot be clearly seen in Figs. 7-10, but it is equivalent to the lower channel 123, the function of which is described below. With the mounting assembly 100 orientated as shown in Fig. 7 the second part 112b is capable of pivoting upwards by 90° relative to the first part 112a. A pre-tensioned torsion spring 150 biases the second part 112b and consequently the arm 113 into a position whereby the arm 113 is in its "normal" position, i.e. perpendicular to the vehicle or structure. In order to move the arm 113 from its "normal" position to its "storage" position the biasing force of the torsion spring 150 must be overcome. Alternatively, as described in relation to Figs. 11-14, the torsion spring 150 may be omitted. In this case the arm 113 will return to its "normal" position under gravity when the force acting on it is removed.

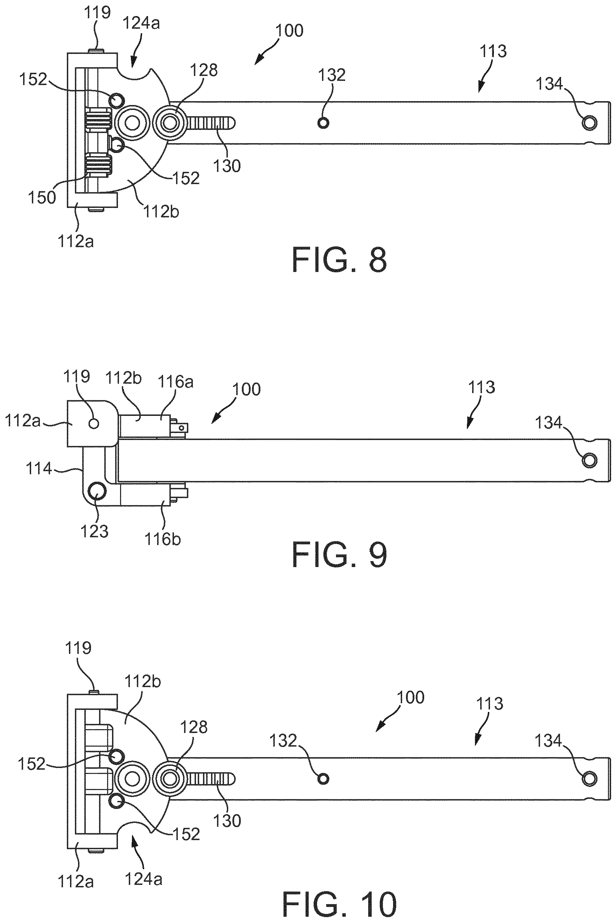

As shown in Figs. 7 and 9, the second part 112b is also provided with a lower channel 123, which is also capable of receiving the pivot bar 119. With the mounting assembly 100 orientated as shown in Fig. 7 this would permit the second part 112b to pivot downwardly by 90°. However, while there may be instances where this is desirable, the primary intention of the upper and lower channels 123 is to enable the mounting assembly to be mounted onto either side of a vehicle. As will be discussed in more detail below, the mounting assembly is "handed", that is to say it is configured to fit onto either the right side or the left side of a vehicle. By providing two channels this enables the mounting assembly to be adapted to fit onto either side of the vehicle. The cam surfaces 116a, 116b are provided with aligned apertures 120 for receiving a pin 122. The arm 113 is pivotally mounted onto the second part of the base plate 112b by the pin 122 which passes through the apertures 120 in the second part of the base plate 112b and through an end portion of the arm 113. In use, when the base plate assembly 112 is mounted on a vehicle, the arm 113 is capable of pivoting through 180°. The cam surfaces 116a, 116b each comprise recesses 124a and 124b. These recesses 124 serve to positively locate the arm 113 into one of its two possible positions, a "normal" position and a "storage" position, as will be described in more detail below. The recesses 124 are generally "c" shaped in profile, and are separated by a spacer sections 126a, 126b. The spacer sections 126 serves to provide additional resistance to movement of the arm 113, as will be described in more detail below. The shape and angle of the recesses 124, and the shape and angle of the spacer sections 126 relative to the recesses 124, can be adjusted to select the force required to move the arm 113 from one of its distinct positions to the other distinct position. The force required to move the arm 113 is also dependent on the strength of the biasing force, as will be described in more detail below.

A pair of roller bearing cam followers 128 are provided on the arm 113. The cam followers 128 have a profile which corresponds to the "c" shaped profile of the recesses 124, such that they may locate within each of the recesses 124 on each cam surface 116a, 116b.The arm 113 further comprises a spring 130 and a spring stop 132 which bias the cam followers 128 against the cam surfaces 116. The spring 130 is a heavy duty coil spring and is located internally within the arm 113, although other biasing means are envisaged within the scope of the invention. The biasing force provided by the spring 130 causes the cam followers 128 to be positively located in the recesses 124 on the cam surfaces 116a, 116b. In order to move the arm 113 from one position to another, i.e. to move the cam follower between adjacent recesses 124, a force must be applied to the arm 113 which exceeds the biasing force provided by the spring 130. The biasing force of the spring 130, or the position of the spring stop 132, can be adjusted to select the sensitivity of the arm 113.

The arm 113 may be rigid or flexible, depending on the particular application. In the present case the arm 113 is cylindrical steel tube. It will be apparent that it is necessary to get the correct balance between rigidity and flexibility, to ensure that the arm 113 is sufficiently resilient to support the net-based armour in operational conditions, while being capable of deflecting when subject to impact. As discussed in relation to Figs. 1-3, the arm 113 itself is only capable of rotation in a single plane. This plane of rotation is parallel to the direction of travel of the vehicle, so is the direction in which the arm is most likely to receive an impact during use, e.g. if the arm 113 strikes an obstacle while the vehicle is driving. It is also the direction which enables the arm 113 to be folded flat against the vehicle for storage.

As discussed above, the plane of rotation of the arm 113 is parallel to the direction of travel of the vehicle. The two pairs of recesses 124a, 124b define the "normal" and "storage" position of the arm 113. When the roller bearing cam follower 128 is received in the recesses 124b the arm 113 is deployed in its "normal", in-use, position in which it extends perpendicular to the vehicle or structure. When the roller bearing cam follower 128 is received in the recesses 124a the arm 113 is in its storage position. When the assembly 100 is mounted to a vehicle recesses 124a face the direction of travel of the vehicle, such that in normal situations, i.e. when the vehicle is travelling in a forward direction, the arm will not be knocked into the "storage" position if it strikes an object. Unlike the assembly 10 of Figs. 1-3, the mounting assembly 100 does not have recesses facing rearwards. If the arm 113 strikes an object while the vehicle is travelling in a forward direction the roller bearings 128 may be dislodged from the recesses 124b. This will cause the roller bearings 128 to travel over the spacer section 126b until the arm 113 lies parallel to the surface of the vehicle. Since there are no recesses in the rearward facing direction the arm will return to its "normal" position in the recesses 124b once the force which caused it to move has been removed. This helps to avoid a situation where the arm 113 is inadvertently moved into a "storage" position. In most situations the arm 113 will only be moved into its "storage" position when a force sufficient to overcome the biasing force is intentionally applied by a user.

As noted, the arm 113 itself is only capable of rotation in a single plane. However, it is possible that the mounting assembly 100 may receive knocks in other directions. The two-part base assembly 112 permits the arm 113 to move in the vertical as well as the horizontal plane. As described above, the second part of the base assembly 112b can pivot upwards by 90° relative to the first part of the base assembly 112 when subjected to a force sufficient to overcome the torsion spring 150. When the force acting on the arm 113 is removed the biasing force of the torsion spring 150 will cause the arm to return to its "normal" position. A locking mechanism may be provided to lock the arm 113 in the vertical position.

As noted above, recesses 124a must face the direction of travel when the vehicle is travelling in a forward direction. Furthermore, it is most desirable that the arm 113 be capable of pivoting upwardly in the vertical plane. Consequently, the mounting assembly 100 is handed, meaning that it can only be fitted to either the right side or the left side of the vehicle. The mounting assembly 100 shown in Fig. 7 is configured to be fitted to the right hand side of a vehicle. Rather than manufacture specific mounting assemblies 100 for each side of a vehicle, the second part of the base assembly 112b is provided with upper and lower mounting channels 121, 123 for receiving the pivot bar 119. If it is desired to mount the assembly 100 of Fig. 7 on the left hand side of a vehicle it will be necessary to flip the assembly over 100 (so that the recesses 124a remain facing the direction of forward travel) and move the pivot bar 119 to the lower channels 123, which will become the upper channels when the assembly 100 is mounted on the left side of the vehicle. This construction improves the manufacturing efficiency and removes the need to make left and right handed versions of the assembly 100.

At the end remote from its attachment to the base plate assembly 112, the arm 113 is provided with an attachment aperture 134 for attaching a net-based armour system to the mounting assembly 100. The attachment aperture 134 may comprise a pin (not shown) for engaging with the net-based armour, or any other suitable attachment means, as is well-known. In an alternative embodiment the arm 113 may not be provided with any specific attachment means, and the net-based armour, such as a net-based armour system, may comprise means for attaching it to the arm 113.

It will be appreciated that the second part of the base assembly 112b is of a generally similar construction to the base 12 of the mounting assembly 10 of Figs. 1-3, the main differences being that there is no rearward facing recesses 124c and that the cam follower 128 is a roller bearing rather than a profiled follower. The second part of the base assembly 112b can be fitted directed to a vehicle or structure in the same way as the mounting assembly 10 of Figs. 1-3. To this end, the second part 112b is provided with mounting apertures 152 on its top, bottom and rear faces to facilitate hard mounting direct to a vehicle or structure.

It should also be appreciated that the two-part base assembly 112 could be incorporated with a fixed arm, which is not capable of rotation relative to the base assembly 112. In this case the arm 113 would only be capable of rotation in the vertical plane as described above.

Figs. 11-14 show a mounting assembly 200 according to the present invention. The mounting assembly 200 shares many features in common with the mounting assembly 100 of Figs. 7-10, and like parts will be numbered the same but increased by 100.

The mounting assembly 200 can be used for a wide variety purposes. In general, the mounting assembly 200 can be used in any application where it is desired to mount a net-based armour system onto a vehicle. The mounting assembly is particularly suited for mounting a net-based armour system at or near a corner of a vehicle or other structure, such that the arm 213 of the mounting assembly projects at an angle of approximately 135° to the surface on which it is mounted. This enables the net-based armour to provide better coverage at the corners of the vehicle, which can be vulnerable if the arms 213 extend perpendicularly to the vehicle.

Fig. 11 shows a perspective view of the mounting assembly 200. The mounting assembly 200 comprises a base plate assembly 212, and an arm 213 pivotally mounted on the base plate assembly 212. In use the arm 213 is capable of pivoting between two distinct positions relative to the base plate assembly 212, as will be described in more detail below.

The base plate assembly 212, is a two-part construction comprising a first part 212a for attaching to a vehicle or structure, and a second part 212b for attaching to the arm 213. The first part 212a is generally u-shaped and comprises a planar section 215 and a pair of lugs 217. The first part 212a is attached to the vehicle by means of bolts 211 which pass through corresponding apertures in the planar section 215. The mounting assembly 200 is particularly intended to be mounted at or near a corner of a vehicle and the planar surface 215 will be mounted onto a forward facing or rearward facing surface such that when it is in its "normal", in use, position the arm 213 will project outwardly at an angle of approximately 135° relative to that surface. This arrangement will be described in more detail below. The second part 212b is teardrop-shaped, but is otherwise constructed in a generally similar manner to the base plate 112b of Figs. 7-10. The second part 212b comprises a planar section 214 and a pair of parallel cam surfaces 216a, 216b projecting at right angles from the planar section 214.

The second part 212b of the base plate assembly 212 is pivotably mounted on the first part 212a by means of a pivot bar 219, which passes through an upper channel 221 in the second part 212b and is received in apertures in the lugs 217. In addition to the upper channel 221 the second part 212b also has a lower channel 223, the function of which is described below. With the mounting assembly 200 orientated as shown in Fig. 11 the second part 212b is capable of pivoting upwards by 90° relative to the first part 212a. The position shown in Fig. 11 is the "normal", in use, position. When the mounting assembly 200 is attached to a vehicle, or other structure, the weight of the second part 212b and the arm 213 maintain the assembly 200 in this position. If the arm 213 is subjected to a force in an upward direction (as shown by arrow A in Fig. 11), it will pivot upwards by up to 90° about the pivot bar 219. When the force is removed the arm 213 will return to its "normal" position under gravity. The combined weight of the second part 212b, the arm 213 and any attached net-based armour ensure that the arm 213 remains in the "normal" position during use and limits any bouncing of the assembly when the vehicle is moving. The mounting assembly 200 shown in Figs. 11-14 differs from the mounting assemblies shown in Figs. 1-10 in that in its "normal", in use, position the arm 213 is not perpendicular to the vehicle or structure. Rather, when the mounting assembly is mounted onto a surface, e.g. a forward or rearward facing surface of a vehicle, the arm will project outwardly at angle of approximately 135° relative to that surface. As discussed above, the mounting assembly 200 is intended to be mounted at or near a corner of a vehicle such that the arm 213 will project outwardly from the vehicle equidistant between the front or rear facing surface and the side panel.

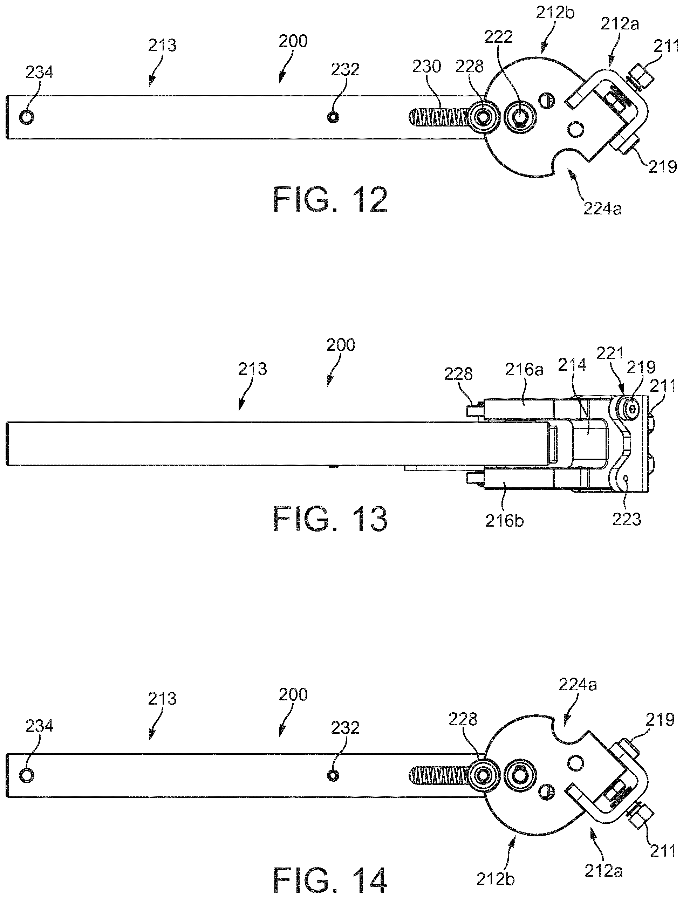

As shown in Figs. 11 and 13, the second part 212b is also provided with a lower channel 223, which is also capable of receiving the pivot bar 219. With the mounting assembly 200 orientated as shown in Fig. 11 this would permit the second part 212b to pivot downwardly by 90°. However, while there may be instances where this is desirable, the primary intention of the upper and lower channels 223 is to enable the mounting assembly to be mounted onto either side of a vehicle. As will be discussed in more detail below, the mounting assembly is "handed", that is to say it is configured to fit onto either the right side or the left side of a vehicle. By providing two channels this enables the mounting assembly to be adapted to fit onto either side of the vehicle. In the orientation illustrated in Fig. 11 the mounting assembly 200 is intended to be mounted to the front right corner of a vehicle or the rear left corner of a vehicle.

The cam surfaces 216a, 216b are generally teardrop-shaped and are provided with aligned apertures 220 for receiving a pin 222. The arm 213 is pivotally mounted onto the second part of the base plate 212b by the pin 222 which passes through the apertures 220 in the second part of the base plate 212b and through an end portion of the arm 213. In use, when the base plate assembly 212 is mounted on a vehicle, the arm 213 is capable of pivoting through approximately 270°. When the mounting assembly 200 is mounted on a forward facing surface adjacent a corner, e.g. at the front right corner of a vehicle, this corresponds to a range of movement for the arm 213 from a position in which it is parallel to the forward facing surface, e.g. a windscreen, to a position in which it is parallel to the adjacent side panel.

The cam surfaces 216a, 216b each comprise recesses 224a and 224b. These recesses 224 serve to positively locate the arm 213 into one of its two possible positions, a "normal" position and a "storage" position, as will be described in more detail below. The recesses 224 are generally "c" shaped in profile, and are separated by a spacer sections 226a, 226b. The spacer sections 226 serves to provide additional resistance to movement of the arm 213, as will be described in more detail below. The shape and angle of the recesses 224, and the shape and angle of the spacer sections 226 relative to the recesses 224, can be adjusted to select the force required to move the arm 213 from one of its distinct positions to the other distinct position. The force required to move the arm 213 is also dependent on the strength of the biasing force, as will be described in more detail below.

A pair of roller bearing cam followers 228 are provided on the arm 213. The cam followers 228 have a profile which corresponds to the "c" shaped profile of the recesses 224, such that they may locate within each of the recesses 224 on each cam surface 216a, 216b.The arm 213 further comprises a spring 230 and a spring stop 232 which bias the cam followers 228 against the cam surfaces 216. The spring 230 is a heavy duty coil spring and is located internally within the arm 213, although other biasing means are envisaged within the scope of the invention. The biasing force provided by the spring 230 causes the cam followers 228 to be positively located in the recesses 224 on the cam surfaces 216a, 216b. In order to move the arm 213 from one position to another, i.e. to move the cam follower between adjacent recesses 224, a force must be applied to the arm 213 which exceeds the biasing force provided by the spring 230. The biasing force of the spring, or the position of the spring stop 232, can be adjusted to select the sensitivity of the arm 213.

The arm 213 may be rigid or flexible, depending on the particular application. In the present case the arm 213 is a square-shaped steel tube. It will be apparent that it is necessary to get the correct balance between rigidity and flexibility, to ensure that the arm 213 is sufficiently resilient to support the net-based armour in operational conditions, while being capable of deflecting when subject to impact. As discussed in relation to Figs. 1-10, the arm 213 itself is only capable of rotation in a single plane. This plane of rotation is parallel to the direction of travel of the vehicle, so is the plane in which the arm is most likely to receive an impact during use, e.g. if the arm 213 strikes an obstacle while the vehicle is driving. It is also a plane which enables the arm 213 to be folded flat against the vehicle for storage.

As discussed above, the plane of rotation of the arm 213 is parallel to the direction of travel of the vehicle. The two pairs of recesses 224a, 224b define the "normal" and "storage" position of the arm 213. When the roller bearing cam follower 228 is received in the recesses 224b the arm 213 is deployed in its "normal", in-use, position in which it extends at an angle of approximately 135° relative to the surface on which it is mounted, which will typically be a front facing or rear facing surface of a vehicle. When the roller bearing cam follower 228 is received in the recesses 224a the arm 213 is in its storage position. When the assembly 200 is mounted to the front or rear surface of a vehicle the recesses 224a are oriented such that the arm 213 lies flat against the front or rear surface in its "storage" position, such that in normal situations, i.e. when the vehicle is travelling in a forward direction, the arm will not be knocked into the "storage" position if it strikes an object. Unlike the assembly 10 of Figs. 1-3, the mounting assembly 200 does not have recesses facing rearwards. If the arm 213 strikes an object while the vehicle is travelling in a forward direction the roller bearings 228 may be dislodged from the recesses 224b. This will cause the roller bearings 228 to travel over the spacer section 226b until the arm 213 lies parallel to the surface of the vehicle. Since there are no recesses in the rearward facing direction the arm will return to its "normal" position in the recesses 224b once the force which caused it to move has been removed. This helps to avoid a situation where the arm 213 is inadvertently moved into a "storage" position. In most situations the arm 213 will only be moved into its "storage" position when a force sufficient to overcome the biasing force is intentionally applied by a user.

As noted, the arm 213 itself is only capable of rotation in a single plane. However, as discussed in relation to the mounting assembly 100 of Figs. 7-10, it is possible that the mounting assembly 200 may receive knocks in other directions. The two-part base assembly 212 permits the arm 213 to move in the vertical as well as the horizontal plane. As described above, the second part of the base assembly 212b can pivot upwards by 90° relative to the first part of the base assembly 212 when subjected to an upwards force sufficient to overcome the force of gravity. When the force acting on the arm 213 is removed the arm will return to its "normal" position. A locking mechanism (not shown) may be provided to lock the arm 213 in the vertical position as an alternative storage position.

As noted above, recesses 224a must be arranged such that the arm 213 will not be knocked into the "storage" position when the vehicle is travelling in a forward direction. Furthermore, it is most desirable that the arm 213 be capable of pivoting upwardly in the vertical plane. Consequently, the mounting assembly 200 is handed, meaning that it must be fitted to a particular side of the vehicle in order to function properly. The mounting assembly 200 shown in Fig. 11 is configured to be fitted to the front right or rear left hand side of a vehicle. Rather than manufacture specific mounting assemblies 200 for each side of a vehicle, the second part of the base assembly 212b is provided with upper and lower mounting channels 221, 223 for receiving the pivot bar 219. If it is desired to mount the assembly 200 of Fig. 11 on the front right or rear left hand side of a vehicle it will be necessary to flip the assembly 200 over and move the pivot bar 219 to the lower channels 223, which will become the upper channels when the assembly 200 is mounted on the front right or rear left side of the vehicle. This construction improves the manufacturing efficiency and removes the need to make left and right handed versions of the assembly 200.

At the end remote from its attachment to the base plate assembly 212, the arm 213 is provided with an attachment aperture 234 for attaching a net-based armour system to the mounting assembly 200. The attachment aperture 234 may comprise a pin (not shown) for engaging with the net-based armour, or any other suitable attachment means, as is well-known. In an alternative embodiment the arm 213 may not be provided with any specific attachment means, and the net-based armour system, may comprise means for attaching it to the arm 213.

It will be appreciated that the second part 212b of the base assembly 212 is of a generally similar construction to the base 12 of the mounting assembly 10 of Figs. 1-3, the main differences being that there is no rearward facing recesses 24c and that the cam follower 228 is a roller bearing rather than a profiled follower. The second part 212b of the base assembly 212 can be fitted directly to a vehicle or structure in the same way as the mounting assembly 10 of Figs. 1-3. To this end, the second part 212b is provided with mounting apertures on its top, bottom and rear faces to facilitate hard mounting direct to a vehicle or structure.

It should also be appreciated that the two-part base assembly 212 could be incorporated with a fixed arm, which is not capable of rotation relative to the base assembly 212. In this case the arm 213 would only be capable of rotation in the vertical plane as described above.

## Claims

1. An armour system comprising:
net-based armour; and
a mounting assembly (100), comprising:
a base (112), for attaching the mounting assembly (100) to a vehicle (42) or structure; and
an arm (113), connected to the base (112), for attaching said net based armour to the mounting assembly (100),
wherein the base (112) comprises a cam surface (116a, 116b) and the arm (113) comprises a cam follower (128) biased against the cam surface (116a, 116b),
the cam surface (116a, 116b) being shaped such that the arm (113) can be located in at least two distinct positions;
wherein the cam surface comprises a pair of recesses corresponding to the distinct positions, each recess having a C-shaped profile, and the cam follower comprises a roller bearing that has a profile that corresponds to the C-shaped profile of the recesses such that the roller bearing may locate within each of the recesses, the cam follower being spring biased to positively locate the roller bearing within the recesses.

2. An armour system according to claim 1, wherein the base (112) comprises a planar section (115) for attaching the mounting assembly (100) to the vehicle (42) or structure, and wherein in a first one of the distinct positions the arm (113) is perpendicular to the planar section (115).

3. An armour system according to claim 1, wherein the base (112) comprises a planar section (115) for attaching the mounting assembly (100) to the vehicle (42) or structure, and wherein in a first one of the distinct positions the arm (113) is at approximately 135° relative to the planar section (115).

4. An armour system according to any one of claims 1-3, wherein the base (112) comprises a planar section for attaching the mounting assembly (100) to the vehicle (42) or structure, and wherein in a second one of the distinct positions the arm (113) is parallel to the planar section (115).

5. An armour system according to any preceding claim, wherein the arm (113) is pivotally mounted between a pair of parallel cam surfaces (116a, 116b).

6. An armour system according to claim 5, wherein the cam follower (128) comprises a pair of cam followers.

7. An armour system according to claim 1, wherein the spring (130) is internally located within the arm (113).

8. An armour system according to any preceding claim, wherein the arm (113) is rigid.

9. An armour system according to claim 8, wherein the arm (113) is tubular, and preferably wherein the arm is a square-shaped tube.

10. An armour system according to any one of claims 1-7, wherein the arm is flexible.

11. An armour system according to any preceding claim, wherein the base (112) is a two-part construction comprising a first part (112a) for attaching to a vehicle (42) or structure and a second part for attaching to the arm, and wherein the second part (112b) is pivotally mounted on the first part.

12. An armour system according to claim 11, wherein the first part (112a) of the base (112) comprises a planar section for attaching the mounting assembly to a vehicle or structure, and wherein the second part (112b) is biased into a position such that the arm (113) is perpendicular to the planar section.

## Patentansprüche

1. Schutzsystem, umfassend: netzbasierter Schutz; und
eine Montagegruppe (100), umfassend:
eine Basis (112) zum Anbringen der Montagegruppe (100) an ein Fahrzeug (42) oder eine Struktur; und
einen Arm (113), der mit der Basis (112) verbunden ist, zum Anbringen des netzbasierten Schutzes an die Montagegruppe (100), wobei die Basis (112) eine Nockenfläche (116a, 116b) und der Arm (113) einen Nockenstößel (128) umfasst, der gegenüber der Nockenfläche (116a, 116b) vorgespannt ist, wobei die Nockenfläche (116a, 116b) so geformt ist, dass der Arm (113) in mindestens zwei unterschiedliche Positionen positioniert werden kann;
wobei die Nockenfläche ein Paar Aussparungen umfasst, die den unterschiedlichen Positionen entsprechen, wobei jede Aussparung ein C-förmiges Profil aufweist und der Nockenstößel ein Walzenlager umfasst, dessen Profil dem C-förmigen Profil der Aussparungen entspricht, so dass das Walzenlager sich innerhalb jeder der Aussparungen positionieren kann, wobei der Nockenstößel federgespannt ist, um das Walzlager positiv in die Aussparungen zu lokalisieren.

2. Schutzsystem nach Anspruch 1, wobei die Basis (112) einen flächigen Abschnitt (115) zum Anbringen der Montagegruppe (100) an das Fahrzeug (42) oder die Struktur umfasst und wobei der Arm (113) in einer ersten der unterschiedlichen Positionen rechtwinklig zum flächigen Abschnitt (115) ist.

3. Schutzsystem nach Anspruch 1, wobei die Basis (112) einen flächigen Abschnitt (115) zum Anbringen der Montagegruppe (100) an das Fahrzeug (42) oder die Struktur umfasst und wobei sich der Arm (113) in einer ersten der unterschiedlichen Positionen in einem Winkel von ca. 135° relativ zum flächigen Abschnitt (115) befindet.

4. Schutzsystem nach einem der Ansprüche 1-3, wobei die Basis (112) einen flächigen Abschnitt zum Anbringen der Montagegruppe (100) an das Fahrzeug (42) oder die Struktur umfasst, und wobei der Arm (113) in einer zweiten der unterschiedlichen Positionen parallel zum flächigen Abschnitt (115) ist.

5. Schutzsystem nach einem der vorstehenden Ansprüche, wobei der Arm (113) zwischen einem Paar paralleler Nockenflächen (116a, 116b) schwenkbar angebracht ist.

6. Schutzsystem nach Anspruch 5, wobei der Nockenstößel (128) ein Paar Nockenstößel umfasst.

7. Schutzsystem nach Anspruch 1, wobei die Feder (130) intern im Arm (113) positioniert ist.

8. Schutzsystem nach einem der vorstehenden Ansprüche, wobei der Arm (113) starr ist.

9. Schutzsystem nach Anspruch 8, wobei der Arm (113) rohrförmig ist, und wobei der Arm vorzugsweise ein quadratisches Rohr ist.

10. Schutzsystem nach einem der Ansprüche 1-7, wobei der Arm flexibel ist.

11. Schutzsystem nach einem der vorstehenden Ansprüche, wobei die Basis (112) eine zweiteilige Konstruktion, umfassend einen ersten Teil (112a) zum Anbringen an ein Fahrzeug (42) oder eine Struktur und einen zweiten Teil zum Anbringen an den Arm, ist und wobei der zweite Teil (112b) schwenkbar am ersten Teil angebracht ist.

12. Schutzsystem nach Anspruch 11, wobei der erste Teil (112a) der Basis (112) einen flächigen Abschnitt zum Anbringen der Montagegruppe an ein Fahrzeug oder eine Struktur umfasst, und wobei der zweite Teil (112b) in eine Position vorgespannt ist, so dass der Arm (113) rechtwinklig zum flächigen Abschnitt ist.

## Revendications

1. Système de blindage comprenant :
un blindage constitué de treillis ; et
un ensemble de montage (100) comprenant :
une base (112) destinée à fixer l'ensemble de montage (100) à un véhicule (42) ou à une structure ; et
un bras (113) raccordé à la base (112) pour fixer ledit blindage constitué de treillis à l'ensemble de montage (100),
ladite base (112) comprenant une surface de came (116a, 116b) et ledit bras (113) comprenant un suiveur de came (128) sollicité contre la surface de came (116a, 116b),
ladite surface de came (116a, 116b) étant façonnée de sorte que le bras (113) puisse être situé dans au moins deux positions distinctes ;
ladite surface de came comprenant une paire d'évidements correspondant à des positions distinctes, chaque évidement possédant un profil en forme de C et le suiveur de came comprenant un roulement à rouleaux qui présente un profil correspondant au profil en forme de C des évidements de sorte que le roulement à rouleaux puisse se situer dans chacun des évidements, ledit suiveur de came étant sollicité par ressort pour positionner positivement le roulement à rouleaux dans les évidements.

2. Système de blindage selon la revendication 1, ladite base (112) comprenant une section plane (115) pour fixer l'ensemble de montage (100) au véhicule (42) ou à la structure, et dans une première position parmi les positions distinctes, ledit bras (113) étant perpendiculaire à la section plane (115).

3. Système de blindage selon la revendication 1, ladite base (112) comprenant une section plane (115) pour fixer l'ensemble de montage (100) au véhicule (42) ou à la structure, et dans une première position parmi les positions distinctes ledit bras (113) étant environ à 135° par rapport à la section plane (115).

4. Système de blindage selon l'une quelconque des revendications 1 à 3, ladite base (112) comprenant une section plane permettant de fixer l'ensemble de montage (100) au véhicule (42) ou à la structure et dans une seconde position parmi les positions distinctes, ledit bras (113) étant parallèle à la section plane (115).

5. Système de blindage selon l'une quelconque des revendications précédentes, ledit bras (113) étant monté pivotant entre une paire de surfaces de came parallèles (116a, 116b).

6. Système de blindage selon la revendication 5, ledit suiveur de came (128) comprenant une paire de suiveurs de came.

7. Système de blindage selon la revendication 1, ledit ressort (130) étant situé en interne dans le bras (113).

8. Système de blindage selon l'une quelconque des revendications précédentes, ledit bras (113) étant rigide.

9. Système de blindage selon la revendication 8, ledit bras (113) étant tubulaire, et de préférence ledit bras étant un tube de forme carrée.

10. Système de blindage selon l'une quelconque des revendications 1 à 7, ledit bras étant flexible.

11. Système de blindage selon l'une quelconque des revendications précédentes, ladite base (112) étant constituée de deux parties comprenant une première partie (112a) destinée à être fixée à un véhicule (42) ou à une structure et une seconde partie destinée è être fixée au bras et ladite seconde partie (112b) étant montée pivotante sur la première partie.

12. Système de blindage selon la revendication 11, ladite première partie (112a) de la base (112) comprenant une section plane permettant la fixation de l'ensemble de montage à un véhicule ou à une structure et ladite seconde partie (112b) étant sollicitée dans une position de sorte que le bras (113) soit perpendiculaire à la section plane.
